# EUROPÄISCHE PATENTSCHRIFT

(11) **EP 3 161 519 B1**
(45) Veröffentlichungstag und Bekanntmachung des Hinweises auf die Patenterteilung: **31.07.2024**
(21) Anmeldenummer: 15729393.7
(22) Anmeldetag: 08.06.2015
(51) Int. Cl.: G01S 15/931, G01S 15/02, G01S 7/52

(54) **VERFAHREN ZUM BETREIBEN EINES KRAFTFAHRZEUGS UND KRAFTFAHRZEUG**
METHOD FOR OPERATING A MOTOR VEHICLE
PROCÉDÉ DE FONCTIONNEMENT D'UN VÉHICULE AUTOMOBILE

(30) Priorität: 25.06.2014 DE 102014108865
(43) Veröffentlichungstag der Anmeldung: 03.05.2017
(73) Patentinhaber: Valeo Schalter und Sensoren GmbH, 74321 Bietigheim-Bissingen (DE); Bayerische Motoren Werke Aktiengesellschaft, 80809 München (DE)
(72) Erfinder: ROSTOCKI, Paul-David, 74321 Bietigheim-Bissingen (DE); HALLEK, Michael, 74321 Bietigheim-Bissingen (DE); BRESSLER, Ulrich, 74321 Bietigheim-Bissingen (DE); BARTSCH, Armin, 80937 München (DE); GUENZEL, Thorben, 38118 Braunschweig (DE)
(74) Vertreter: Hofstetter, Schurack & Partner
(86) Internationale Anmeldenummer: PCT/EP2015/062712
(87) Internationale Veröffentlichungsnummer: WO 2015/197350

(56) Entgegenhaltungen:
- WO-A1-2012/123555
- US-A1- 2007 276 565
- US-A1- 2014 039 750

## Beschreibung

Die Erfindung betrifft ein Verfahren zum Betreiben eines Kraftfahrzeugs, bei welchem durch zumindest einen Ultraschallsensor Ultraschallwellen in einen Umgebungsbereich des Kraftfahrzeugs zum Durchführen einer Abstandsmessung ausgesendet werden. Die Erfindung betrifft außerdem ein Kraftfahrzeug.

Aus der WO 2012/123555 A1 ist ein Fahrzeug mit einem Ultraschallsensor bekannt, der am Heck angeordnet ist. Das Kraftfahrzeug ist ein Hybridfahrzeug. Bei einem Betrieb des Kraftfahrzeugs mit der elektrischen Antriebsmaschine wird dann auf die Verbrennungskraftmaschine umgeschaltet, wenn das Fahrzeug in einem Bereich mit Wasser fährt, der eine bestimmte Tiefe aufweist.

Des Weiteren ist aus der US 2014/039750 A1 ein Kraftfahrzeug bekannt, welches einen Frontsensor aufweist, der ein Ultraschallsensor ist. Bei einem Kalibrieren des Ultraschallsensors wird das Kraftfahrzeug mit dem elektrischen Antrieb betrieben und somit quasi die Brennkraftmaschine deaktiviert.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Es kann auch vorkommen, dass ein Ultraschallsensor eines Kraftfahrzeugs blockiert ist. Verfahren, welche zum Erkennen eines blockierten Zustands eines Ultraschallsensors dienen, sind bereits aus dem Stand der Technik bekannt. Im Stand der Technik wird dabei eine Situation erkannt, in welcher der Ultraschallsensor durch eine zusätzliche Masse, etwa durch Schmutz und/oder Schnee und/oder Eis, verdeckt ist. Da Ultraschallsensoren heutzutage immer häufiger auch außerhalb der eigentlichen Parkhilfefunktionalität eingesetzt werden, soll im Betrieb des Kraftfahrzeugs sichergestellt werden, dass die am Kraftfahrzeug vorhandenen Ultraschallsensoren die in der Umgebung des Kraftfahrzeugs befindlichen Hindernisse sicher erkennen bzw. die Abstände auch zuverlässig bis zu einer vorbestimmten Reichweite erfassen können. Sind die Ultraschallsensoren mit einer zusätzlichen Masse verdeckt, soll dies zuverlässig detektiert werden. Die bekannten Verfahren zur Erkennung von Eis oder Schmutz basieren grundsätzlich auf der Auswertung von Nebeneffekten, welche durch die zusätzliche Masse an dem Ultraschallsensor verursacht werden. So wird durch eine zusätzliche Masse beispielsweise die so genannte Ausschwingzeit der Membran des Ultraschallsensors beeinflusst oder es wird ein virtuelles Echo bzw. ein Scheinecho generiert, was durch entsprechende Auswertung des elektrischen Empfangssignals des Ultraschallsensors detektiert werden kann.

Im Gegenstand gemäß DE 102 47 971 A1 wird die Eigenfrequenz bzw. Resonanzfrequenz des Ultraschallsensors gemessen und mit abgelegten Referenzwerten verglichen. Dieses Verfahren basiert auf der Tatsache, dass die Resonanzfrequenz des Ultraschallsensors ein direkter Indikator für eine Verschmutzung, Eis- oder Schneeschicht ist, da diese zusätzliche Schicht die Masse der harmonischen Schwingung beeinflusst. Mit der zusätzlichen Masse der Verschmutzung bzw. der Eis- oder Schneeschicht ändert sich nämlich auch die schwingende Masse und folglich auch die Resonanzfrequenz des Sensors.

Um einen mit Schmutz und/oder Eis und/oder Schnee verdeckten Zustand eines Ultraschallsensors erkennen zu können, schlägt die DE 10 2009 040 992 A1 vor, die Ausschwingfrequenz des Ultraschallsensors im Anschluss an eine Anregung der Membran zu erfassen und mit der Anregungsfrequenz zu vergleichen. Abhängig von dem Ergebnis dieses Vergleichs wird festgestellt, ob der Ultraschallsensor blockiert ist oder nicht.

Weiterhin beschreibt die DE 10 2010 021 960 A1 ein Verfahren, bei welchem zur Erkennung des blockierten Zustands eines Ultraschallsensors die Ausschwingzeit der Membran über mehrere Messzyklen des Ultraschallsensors hinweg ausgewertet wird. Eine weitere Plausibilisierung kann hier darin bestehen, dass die Erkennung des blockierten Zustands nur unter der Voraussetzung erfolgt, dass eine Temperatur der Umgebung des Kraftfahrzeugs unterhalb eines vorgegebenen Grenzwerts liegt. Dieser Grenzwert kann beispielsweise 0°C betragen. Somit kann die Fehlerrate bei der Erkennung des blockierten Zustands reduziert werden.

Es hat sich auch herausgestellt, dass in manchen Situationen der Ultraschallsensor zwar blockiert sein kann, dass jedoch diese "Blindheit" des Ultraschallsensors nicht durch eine zusätzliche Masse am Ultraschallsensor selbst verursacht wird. Es wurden nämlich Situationen detektiert, bei denen eine "Blindheit" des Ultraschallsensors auch ohne eine wesentliche Änderung der Ausschwingzeit der Membran sowie ohne Änderung der Resonanzfrequenz aufgetreten ist.

Es ist Aufgabe der Erfindung, bei einem Verfahren der eingangs genannten Gattung und einem Kraftfahrzeug Maßnahmen zu treffen, die einen zuverlässigen Betrieb des zumindest einen Ultraschallsensors gewährleisten.

Diese Aufgabe wird erfindungsgemäß durch ein Verfahren und ein Kraftfahrzeug mit den Merkmalen gemäß den jeweiligen unabhängigen Patentansprüchen gelöst.

Bei einem erfindungsgemäßen Verfahren zum Betreiben eines Kraftfahrzeugs werden durch zumindest einen im aktiven Betrieb betriebenen Ultraschallsensor einer Ultraschallsensorvorrichtung des Kraftfahrzeugs Ultraschallwellen in einen Umgebungsbereich des Kraftfahrzeugs ausgesendet. Ein wesentlicher Gedanke der Erfindung besteht darin, dass das Kraftfahrzeug als Hybridfahrzeug mit einer Brennkraftmaschine und einer elektrischen Antriebsmaschine ausgestattet wird und zumindest zeitweise in dem aktiven Betrieb des an einem Heck des Kraftfahrzeugs angeordneten Ultraschallsensors das Kraftfahrzeug mit der elektrischen Antriebsmaschine betrieben bzw. angetrieben wird. Dadurch wird das Aussenden von Ultraschallwellen durch eine Abgaswolke, wie sie beim Betrieb der Brennkraftmaschine erzeugt wird, nicht beeinträchtigt.

Alternativ wird im Falle, dass bei einem Aktivieren des Ultraschallsensors das Kraftfahrzeug mit der Brennkraftmaschine betrieben wird, die Brennkraftmaschine abgeschaltet und die elektrische Antriebsmaschine aktiviert. Es wird somit überprüft, ob die Brennkraftmaschine aktiv ist und, falls dies zutrifft, diese abgeschaltet und das Antreiben des Kraftfahrzeugs mittels der elektrischen Antriebsmaschine durchgeführt.

Alternativ wird anhand von Sensordaten zumindest eines von dem Ultraschallsensor verschiedenen Sensors des Kraftfahrzeugs eine von einer Auspuffanlage des Kraftfahrzeugs in den Umgebungsbereich ausgegebene und von der Brennkraftmaschine im aktiven Betrieb erzeugte Abgaswolke, an welcher die Ultraschallwellen reflektiert werden, detektiert und abhängig von der Detektion der Abgaswolke die Brennkraftmaschine abgeschaltet und die elektrische Antriebsmaschine aktiviert. Bei dieser Ausführung wird somit zunächst praktisch überprüft, ob eine Abgaswolke vorhanden ist und wenn dies der Fall ist, wird erst dann auf die elektrische Antriebsmaschine umgeschaltet. Da beispielsweise dann, wenn ein relativ starker Wind weht, und die Abgaswolke schnell vertrieben wird und somit dann für die Ultraschallwellen nicht störend ist, ist es nicht zwingend, dass auf die Antriebmaschine insbesondere sofort umgeschaltet wird.

Alternativ wird der aktive Betrieb des Kraftfahrzeugs mit der elektrischen Antriebsmaschine mit dem Aktivieren des Ultraschallsensors gestartet. Bei dieser Ausführung wird somit insbesondere sofort, wenn das bisherige Antreiben des Kraftfahrzeugs nicht bereits ohnehin mit der elektrischen Antriebsmaschine erfolgt, auf die elektrische Antriebsmaschine umgeschaltet. Dadurch wird Diagnoseaufwand zur Bestimmung einer Abgaswolke vermieden, wodurch auch ein zeitlicher Vorteil für den Start des aktiven Betriebs des Ultraschallsensors erreicht wird. Bei dieser Ausführung wird somit unerheblich davon, ob überhaupt eine für den Betrieb des Ultraschallsensors nachteilige Abgaswolke vorhanden ist, die elektrische Antriebsmaschine betrieben, wenn der Ultraschallsensors aktiv sein soll.

Vorzugsweise wird der aktive Betrieb des Ultraschallsensors mit dem Starten eines Fahrerassistenzsystems, dem der Ultraschallsensor funktionell zugeordnet ist, gestartet.

insbesondere wird der aktive Betrieb des Ultraschallsensors mit dem Einlegen einer Rückwärtsfahrstufe des Kraftfahrzeugs gestartet.

Die vorteilhafte Ausführung basiert auf mehreren Erkenntnissen: Es liegt zunächst die Erkenntnis zugrunde, dass im Stand der Technik manchmal Situationen auftreten können, bei denen ein blockierter Zustand bzw. eine "Blindheit" des Ultraschallsensors anhand von Schwingungsparametern des Ultraschallsensors nicht detektiert werden kann. Es kann nämlich auch eine "Blindheit" des Ultraschallsensors auftreten, ohne dass sich die Ausschwingzeit oder aber die Resonanzfrequenz des Sensors wesentlich ändert. Dieser Zustand kann im Stand der Technik nicht detektiert und folglich auch nicht angezeigt werden. Eine weitere Erkenntnis besteht darin, dass eine solche Situation dadurch verursacht werden kann, dass sich im Bereich des Ultraschallsensors eine Abgaswolke ausbildet, welche von einer Auspuffanlage des Kraftfahrzeugs ausgegeben wird. Die Erfindung beruht nicht zuletzt auf der Erkenntnis, dass die Nachteile des Stands der Technik dadurch umgangen werden können, dass eine derartige Abgaswolke, an deren Oberfläche bzw. Grenzschicht die Ultraschallwellen potentiell reflektiert werden und somit die Abstandsmessung verfälschen können, durch die Ultraschallsensorvorrichtung detektiert wird und dann entsprechende Maßnahmen getroffen werden, welche einen sicheren Betrieb gewährleisten. Die Ultraschallsensorvorrichtung kann somit besonders betriebssicher und zuverlässig betrieben werden.

Unter einer Abgaswolke wird vorliegend eine Phase und somit eine besonders hohe Konzentration eines Abgases verstanden, welches durch die Auspuffanlage des Kraftfahrzeugs ausgegeben wird und sich dann im Bereich eines Endrohrs der Auspuffanlage konzentriert. Es hat sich herausgestellt, dass eine solche Abgaswolke eine Grenzschicht besitzt, an welcher die Ultraschallwellen reflektiert werden können. Diese Reflektion verursacht ein Signalecho am Ultraschallsensor, was im Stand der Technik fälschlicherweise als Detektion eines Objekts interpretiert wird.

Hinsichtlich der Detektion der Abgaswolke im Erfassungsbereich des Ultraschallsensors kann in einer Ausführungsform vorgesehen sein, dass abhängig von den genannten Sensordaten ein Wahrscheinlichkeitswert berechnet wird, welcher die aktuelle Wahrscheinlichkeit für die Präsenz einer derartigen Abgaswolke angibt, an welcher Ultraschallwellen reflektiert werden können. Die Abgaswolke kann dann detektiert werden bzw. die Detektion kann dann bestätigt werden, wenn der berechnete Wahrscheinlichkeitswert einen vorbestimmten Grenzwert überschreitet. Zur Berechnung des Wahrscheinlichkeitswerts können insbesondere mehrere Messgrößen herangezogen werden, welche durch verschiedenste Sensoren des Kraftfahrzeugs erfasst werden können. Je mehr Messgrößen bzw. Parameter bei der Berechnung des Wahrscheinlichkeitswerts berücksichtigt werden, desto präziser und realitätsgetreuer kann diese Wahrscheinlichkeit für die Präsenz der Abgaswolke bestimmt werden.

In einer Ausführungsform kann vorgesehen sein, dass das Detektieren der Abgaswolke, insbesondere der Abgasgrenzschicht, insbesondere die Bestimmung des Wahrscheinlichkeitswerts, abhängig von zumindest einer Messgröße als Sensordaten erfolgt, welche mittels eines in der Auspuffanlage selbst angeordneten Sensors gemessen wird. Die Verwendung eines solchen Sensors hat den Vorteil, dass anhand von Sensordaten dieses Sensors sehr zuverlässig auf die Konzentration des Abgases im Bereich des Endrohrs zurückgeschlossen und somit mit großer Genauigkeit bestimmt werden kann, ob sich im Bereich des Ultraschallsensors eine Abgaswolke ausbildet, welche ein Hindernis für die Ultraschallwellen darstellt.

insbesondere kann die Detektion der Abgaswolke, insbesondere der Abgas-Grenzschicht, abhängig von zumindest einer der folgenden Messgrößen erfolgen:
- einer Temperatur des Abgases - diese kann mittels eines Temperatursensors in der Auspuffanlage erfasst werden; für die Detektion der Abgaswolke kann vorausgesetzt werden, dass die Temperatur des Abgases größer als ein vorbestimmter Schwellwert ist - dies bedeutet insbesondere, dass der oben genannte Wahrscheinlichkeitswert nur dann größer als Null sein kann, wenn die Temperatur des Abgases größer als der Schwellwert ist; und/oder
- einer Feuchtigkeit des Abgases - diese kann beispielsweise mittels eines Feuchtigkeitssensors in der Auspuffanlage erfasst werden; für die Detektion der Abgaswolke kann vorausgesetzt werden, dass die Feuchtigkeit des Abgases größer als ein vorbestimmter zugeordneter Schwellwert ist - dies bedeutet insbesondere, dass der oben genannte Wahrscheinlichkeitswert nur dann größer als Null sein kann, wenn die Feuchtigkeit des Abgases größer als der zugeordnete Schwellwert ist; und/oder

- einer Strömungsgeschwindigkeit des Abgases - auch diesbezüglich kann vorgesehen sein, dass die Abgaswolke nur dann detektiert werden kann bzw. der Wahrscheinlichkeitswert größer als Null sein kann, wenn die Strömungsgeschwindigkeit größer als ein vorgegebener zugeordneter Schwellwert ist; und/oder
- einem Abgasdruck - auch zu dieser Messgröße kann ein entsprechender Schwellwert vordefiniert werden, mit welchem der aktuelle Abgasdruck verglichen wird, wobei die Detektion der Abgaswolke voraussetzt, dass der Abgasdruck größer als der zugeordnete Schwellwert ist; und/oder
- einem Massenstrom des Abgases - auch dieser kann mit einem zugeordneten Schwellwert verglichen werden; die Abgaswolke kann nur dann detektiert werden, wenn der Massenstrom größer als der zugeordnete Schwellwert ist; und/oder
- einer das Verhältnis einer Verbrennungsluft zu einem Kraftstoff in zumindest einem Brennraum einer Brennkraftmaschine des Kraftfahrzeugs charakterisierenden Messgröße, welche insbesondere mittels einer Lambda-Sonde gemessen wird - die Detektion der Abgaswolke kann voraussetzen, dass das Verhältnis Verbrennungsluft/Kraftstoff kleiner als ein zugeordneter Schwellwert ist.

Ergänzend oder alternativ kann vorgesehen sein, dass beim Detektieren der Abgaswolke auch eine aktuelle Motortemperatur einer Brennkraftmaschine des Kraftfahrzeugs als Sensordaten berücksichtigt wird. Es gilt nämlich die Beziehung, dass je kleiner die Motortemperatur ist, desto größer die Wahrscheinlichkeit der Präsenz einer Abgaswolke ist.

Es kann auch vorgesehen sein, dass das Detektieren der Abgaswolke abhängig von atmosphärischen Umgebungsbedingungen des Kraftfahrzeugs erfolgt, wie insbesondere abhängig von einer Windgeschwindigkeit und/oder einer Luftfeuchtigkeit und/oder einer Lufttemperatur in der Umgebung des Kraftfahrzeugs. Diese Parameter können mittels entsprechender Sensoren und/oder abhängig von einer aktuellen geographischen Position des Kraftfahrzeugs erfasst werden, welche mittels eines Navigationsempfängers - insbesondere eines GPS-Empfängers - erfasst und an einen Internetserver übermittelt wird, welcher dann dem Kraftfahrzeug die aktuellen atmosphärischen Umgebungsbedingungen für die aktuelle Position des Kraftfahrzeugs mitteilt. Auch die atmosphärischen Umgebungsbedingungen haben einen Einfluss auf die Erzeugung einer Abgaswolke im Bereich des Kraftfahrzeugs. So ist die Präsenz der Abgaswolke umso wahrscheinlicher, je geringer die Lufttemperatur und/oder je größer die Luftfeuchtigkeit der Umgebung ist.

Wird die Lufttemperatur erfasst, so kann eine Temperaturdifferenz zwischen der Abgastemperatur einerseits und der Lufttemperatur andererseits und/oder eine Differenz zwischen der Motortemperatur einerseits und der Lufttemperatur andererseits bestimmt und bei der Detektion der Abgaswolke berücksichtigt werden. Je größer diese Temperaturdifferenz ist, desto größer ist nämlich die Wahrscheinlichkeit der Präsenz einer Abgaswolke im Bereich des Endrohrs der Auspuffanlage.

Das Detektieren der Abgaswolke, und insbesondere die Berechnung der Wahrscheinlichkeit für die Präsenz der Abgaswolke, kann auch unter Berücksichtigung zumindest eines Konstruktionsparameters des Kraftfahrzeugs erfolgen. Als Konstruktionsparameter kann zumindest einer der folgenden Parameter berücksichtigt werden:
- ein Abstand zwischen dem Ultraschallsensor einerseits und einem Auslass eines Endrohrs der Auspuffanlage andererseits - es gilt nämlich die Beziehung, dass je geringer dieser Abstand ist, desto größer die Wahrscheinlichkeit für die Präsenz einer Abgaswolke im Erfassungsbereich des Ultraschallsensors ist; und/oder
- eine Querschnittsgröße des Endrohrs - auch der Querschnitt des Endrohrs hat nämlich einen Einfluss auf die Erzeugung der Abgaswolke im Bereich des Endrohrs; und/oder
- die Anzahl von Endrohren der Auspuffanlage und/oder
- die Anzahl von Abgasturboladern des Kraftfahrzeugs und/oder
- ein Hubvolumen einer Brennkraftmaschine des Kraftfahrzeugs, d.h. ein Hubraum und/oder
- ein Typ der Brennkraftmaschine, d.h. ob es sich bei der Brennkraftmaschine um ein Ottomotor oder aber eine Diesel-Maschine handelt.

Bei der Detektion der Abgaswolke kann optional auch zumindest ein Parameter berücksichtigt werden, welcher durch den Ultraschallsensor selbst erfasst wird. Und zwar kann das Detektieren der Abgaswolke, insbesondere die Berechnung des Wahrscheinlichkeitswerts, in Abhängigkeit von einer Laufzeit der Ultraschallwellen und somit abhängig von den gemessenen Abständen und/oder in Abhängigkeit von der Anzahl von Zielechos bzw. der Anzahl von detektierten Objekten erfolgen. Dabei kann eine direkte Messung, bei welcher ein und derselbe Ultraschallsensor die Ultraschallwellen aussendet und dann die Zielechos empfängt, und/oder eine indirekte Messung berücksichtigt werden, bei welcher ein Ultraschallsensor die Ultraschallwellen aussendet und ein separater Ultraschallsensor die Zielechos empfängt. Wird beispielsweise ein Objekt in einem sehr geringen Abstand detektiert, so kann dies zur Plausibilisierung der Detektion der Abgaswolke dahingehend interpretiert werden, dass es sich bei diesem nahen Objekt um die Abgaswolke selbst handelt. Auf diesem Wege kann die Detektion der Abgaswolke zuverlässig plausibilisiert werden.

Die Erfindung betrifft außerdem eine Ultraschallsensorvorrichtung für ein Kraftfahrzeug, mit zumindest einem Ultraschallsensor und mit einer Steuereinrichtung, welche dazu ausgelegt ist, den Ultraschallsensor zum Aussenden von Ultraschallwellen in einen Umgebungsbereich des Kraftfahrzeugs zum Durchführen einer Abstandsmessung anzusteuern. Die Ultraschallsensorvorrichtung ist zum Durchführen eines erfindungsgemäßen Verfahrens ausgebildet.

Ein erfindungsgemäßes Kraftfahrzeug, insbesondere ein Personenkraftwagen, umfasst eine Ultraschallsensorvorrichtung, welche zumindest einen Ultraschallsensor aufweist, durch welchen im aktiven Betrieb Ultraschallwellen in einen Umgebungsbereich des Kraftfahrzeugs aussendbar sind. Das Kraftfahrzeug weist eine Brennkraftmaschine und eine elektrische Antriebsmaschine auf, wobei das Kraftfahrzeug zumindest zeitweise in dem aktiven Betrieb des an einem Heck des Kraftfahrzeugs angeordneten Ultraschallsensors mit der elektrischen Antriebsmaschine betrieben bzw. angetrieben ist.

Es erweist sich als vorteilhaft, wenn infolge der Detektion der Abgaswolke die Brennkraftmaschine des Kraftfahrzeugs abgestellt und zum Antreiben des Kraftfahrzeugs die elektrische Antriebsmaschine in Betrieb genommen wird. Diese Maßnahme hat den Vorteil, dass sich die Abgaswolke unmittelbar nach Abstellen der Brennkraftmaschine auflöst und somit den Betrieb der Ultraschallsensorvorrichtung nicht mehr verhindert.

Die mit Bezug auf das erfindungsgemäße Verfahren vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensorvorrichtung gemäß einer Ausführungsform der Erfindung; und
- Fig. 2: ein Flussdiagramm eines Verfahrens gemäß einer Ausführungsform der Erfindung.

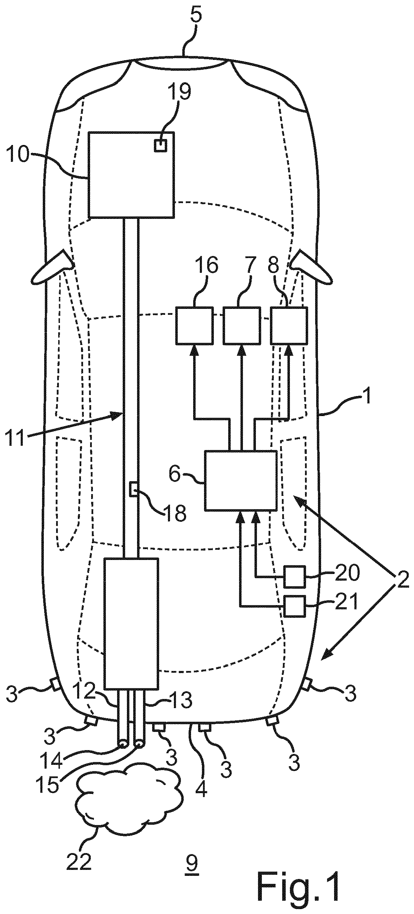

Ein in Fig. 1 dargestelltes Kraftfahrzeug 1 ist beispielsweise ein Personenkraftwagen. Das Kraftfahrzeug 1 umfasst eine Ultraschallsensorvorrichtung 2, welche beispielsweise einem Fahrerassistenzsystem, beispielsweise einem Parkassistenzsystem zugehörig ist. Die Ultraschallsensorvorrichtung 2 dient zum Unterstützen des Fahrers des Kraftfahrzeugs 1 beim Durchführen von Parkvorgängen. Sie umfasst zu diesem Zwecke eine Vielzahl von Ultraschallsensoren 3, welche am hinteren Stoßfänger 4 verteilt angeordnet sind. Entsprechende Ultraschallsensoren 3 können auch am vorderen Stoßfänger 5 angeordnet sein (nicht abgebildet). Die Ultraschallsensoren 3 sind mit einer Steuereinrichtung 6 der Ultraschallsensorvorrichtung 2 elektrisch gekoppelt. Die Steuereinrichtung 6 stellt ein Steuergerät dar, welches beispielsweise einen digitalen Signalprozessor und/oder einen Mikrocontroller beinhalten kann und zur Ansteuerung der Ultraschallsensoren 3 dient. Die Steuereinrichtung 6 empfängt Messdaten von den Ultraschallsensoren 3 und bestimmt in Abhängigkeit von diesen Messdaten die Abstände zwischen dem Kraftfahrzeug 1 und in seiner Umgebung befindlichen Hindernissen. In Abhängigkeit von diesen Abständen kann die Steuereinrichtung 6 beispielsweise einen Lautsprecher 7 und/oder eine optische Anzeigeeinrichtung 8 - beispielsweise ein Display - ansteuern. Mit Hilfe des Lautsprechers 7 und/oder der Anzeigeeinrichtung 8 wird der Fahrer über die gemessenen Abstände informiert. Zur Durchführung einer Abstandsmessung werden die jeweiligen Ultraschallsensoren 3 zum Aussenden von Ultraschallwellen in einen Umgebungsbereich 9 des Kraftfahrzeugs 1 angesteuert. Dabei sind sowohl sogenannte Kreuzmessungen (indirekte Messungen) als auch direkte Messungen möglich. Bei indirekten Messungen sendet ein erster Ultraschallsensor 3 die Ultraschallwellen aus, während zumindest ein anderer, zweiter Ultraschallsensor 3 als Empfangssensor betrieben wird, welcher die Echosignale empfängt. Bei direkten Messungen wird hingegen ein und derselbe Ultraschallsensor 3 sowohl zum Senden als auch zum Empfangen angesteuert.

Gegebenenfalls kann die Ultraschallsensorvorrichtung 2 auch ein automatisches oder semiautomatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Ultraschallsensorvorrichtung 2 sowohl die Längsführung als auch die Querführung des Kraftfahrzeugs 1, während bei semiautomatischen bzw. halbautomatischen Systemen die Ultraschallsensorvorrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Ultraschallsensorvorrichtung 2 ausgegeben werden.

Zum Antreiben des Kraftfahrzeugs 1 ist eine Brennkraftmaschine 10 vorgesehen, an welcher in an sich bekannter Weise eine Auspuffanlage 11 des Kraftfahrzeugs 1 angebunden ist. Die Auspuffanlage 11 weist im Ausführungsbeispiel zwei im Bereich des hinteren Stoßfängers 4 auslaufende Endrohre 12, 13 auf, welche jeweils einen Auslass 14, 15 aufweisen, über welchen ein durch die Brennkraftmaschine 10 erzeugtes Abgas in den Umgebungsbereich 9 ausgegeben wird. Im Kraftfahrzeug 1 ist des Weiteren ein Steuergerät 16 angeordnet, welches zur Ansteuerung einer nicht dargestellten Drosselklappe der Auspuffanlage 11 und/oder zum Schließen und Öffnen der Endrohre 12, 13 und/oder zur Ansteuerung der Brennkraftmaschine 10 dient.

Das Kraftfahrzeug 1 ist als Hybrid-Fahrzeug ausgebildet und weist zusätzlich zur Brennkraftmaschine 10 eine elektrische Antriebsmaschine 17 auf, welche bei Bedarf in Betrieb genommen werden kann.

In der Auspuffanlage 11 ist zumindest ein Sensor 18 angeordnet, welcher zum Erfassen zumindest einer der folgenden Messgrößen dient: einer aktuellen Temperatur des Abgases und/oder einer aktuellen Feuchtigkeit des Abgases und/oder einer aktuellen Strömungsgeschwindigkeit des Abgases und/oder eines aktuellen Abgasdrucks und/oder eines aktuellen Massenstromes des Abgases und/oder einer Messgröße, welche das aktuelle Verhältnis einer Verbrennungsluft zu einem Kraftstoff in zumindest einem Brennraum der Brennkraftmaschine 10 charakterisiert (in diesem Falle wird eine Lambda-Sonde verwendet).

Die Sensordaten des zumindest einen Sensors 18 werden an die Steuereinrichtung 6 übermittelt.

Darüber hinaus kann mittels eines Temperatursensors 19 eine Motortemperatur der Brennkraftmaschine 10 erfasst werden. Auch diese Sensordaten, welche die jeweils aktuelle Motortemperatur angeben, werden an die Steuereinrichtung 6 übermittelt.

Im Kraftfahrzeug 1 kann außerdem zumindest ein Sensor 20 angeordnet sein, welcher zur Erfassung von atmosphärischen Umgebungsbedingungen des Kraftfahrzeugs 1 dient, insbesondere einer Luftfeuchtigkeit und/oder Lufttemperatur und/oder Windgeschwindigkeit im Umgebungsbereich 9. Ergänzend oder alternativ können zur Erfassung dieser Daten auch Positionssignale herangezogen werden, welche mittels eines Navigationsempfängers 21 (zum Beispiel GPS) bereitgestellt werden und die aktuelle geographische Position des Kraftfahrzeugs 1 angeben. Ist die aktuelle Position des Kraftfahrzeugs 1 in der Steuereinrichtung 6 bekannt, kann eine Kommunikationsverbindung zwischen der Steuereinrichtung 6 einerseits und einem Internetserver andererseits aufgebaut werden, über welche von der Steuereinrichtung 6 an den Internetserver die aktuelle Position des Kraftfahrzeugs 1 übermittelt wird. Der Internetserver kann dann an die Steuereinrichtung 6 Daten übermitteln, welche die aktuelle Lufttemperatur und/oder Windgeschwindigkeit und/oder Luftfeuchtigkeit in der Umgebung des Kraftfahrzeugs 1 angeben.

Die Steuereinrichtung 6 ist in einem Ausführungsbeispiel so ausgelegt, dass sie abhängig von Sensordaten detektieren kann, ob sich im Bereich des jeweiligen Auslasses 14, 15 der Endrohre 12, 13 und somit im Erfassungsbereich der Ultraschallsensoren 3 eine Abgaswolke 22 ausbildet, an deren Grenzschicht die von den Ultraschallsensoren 3 ausgesendeten Ultraschallwellen reflektiert werden können.

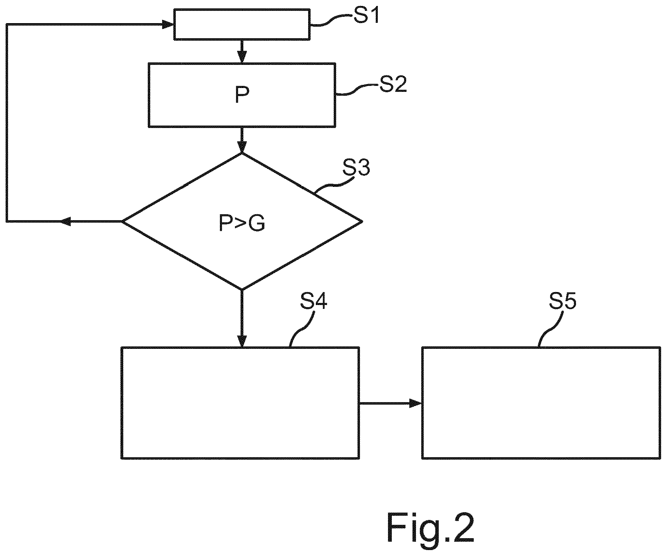

Ein diesbezügliches Verfahren zum Betreiben des Kraftfahrzeugs 1 wird nachfolgend unter Bezugnahme auf Fig. 2 näher erläutert:

Das Verfahren beginnt in Schritt S1, in welchem durch die Steuereinrichtung 6 Sensordaten zur Detektion einer Abgaswolke 22 erfasst werden. Es können folgende Sensordaten berücksichtigt werden:
- die gemessene Temperatur des Abgases und/oder
- die Feuchtigkeit des Abgases und/oder
- die Strömungsgeschwindigkeit des Abgases und/oder
- der Abgasdruck und/oder
- der Massenstrom des Abgases und/oder
- das Verhältnis der Verbrennungsluft zum Kraftstoff und/oder
- die aktuelle Motortemperatur und/oder
- die aktuelle Windgeschwindigkeit und/oder Luftfeuchtigkeit und/oder Lufttemperatur in der Fahrzeugumgebung.

Optional können in der Steuereinrichtung 6 auch folgende Konstruktionsparameter des Kraftfahrzeugs abgelegt sein und bei der Detektion der Abgaswolke 22 berücksichtigt werden:
- ein Abstand zwischen dem jeweiligen Ultraschallsensor 3 und dem Auslass 14, 15 des jeweiligen Endrohrs 12, 13 und/oder
- eine Querschnittsgröße der Endrohre 14, 15 und/oder
- die Anzahl von Endrohren 12, 13 und/oder
- die Anzahl von Abgasturboladern der Auspuffanlage 11 und/oder
- der Hubraum der Brennkraftmaschine 10 und/oder
- der Typ der Brennkraftmaschine 10 (Otto-Motor oder Diesel).

Optional kann die Steuereinrichtung 6 auch die durch den jeweiligen Ultraschallsensor 3 gemessenen Abstände und/oder die Anzahl von empfangenen Zielechos berücksichtigen.

In einem Schritt S2 werden die oben genannten Größen bzw. Parameter in einer beliebigen Kombination durch die Steuereinrichtung 6 ausgewertet, wobei auch eine Gewichtung der Messgrößen vorgenommen werden kann. Bei der Detektion der Abgaswolke 22 wird ein Wahrscheinlichkeitswert P berechnet, welcher die aktuelle Wahrscheinlichkeit für das Vorhandensein einer solchen Abgaswolke 22 angibt. Bei der Berechnung des Wahrscheinlichkeitswerts P werden die oben genannten Sensordaten und optional auch die Konstruktionsparameter des Kraftfahrzeugs 1 berücksichtigt. Wie bereits erwähnt, können diese auch entsprechend gewichtet werden. Gemäß Schritt S3 wird dann überprüft, ob der berechnete Wahrscheinlichkeitswert P größer als ein vorgegebener Grenzwert G ist. Wird durch die Steuereinrichtung 6 detektiert, dass der Wahrscheinlichkeitswert P größer als der Grenzwert G ist, so wird von einer Präsenz einer die Ultraschallwellen der Ultraschallsensoren 3 beeinträchtigenden Abgaswolke 22 im Erfassungsbereich der Ultrasensorvorrichtung 2 ausgegangen und insbesondere ab dann wird gemäß einem Schritt S5 der weitere Betrieb des Kraftfahrzeugs 1 mit der elektrischen Antriebsmaschine 17 durchgeführt, indem die Brennkraftmaschine 10 gemäß einem Schritt S4 abgeschaltet wird und der aktive Betrieb der elektrischen Antriebsmaschine 17 gestartet wird.

Wird keine Abgaswolke 22 detektiert oder eine Abgaswolke 22 detektiert, welche die Ultraschallwellen nicht beeinträchtigt, kann weiterhin die Brennkraftmaschine 10 im aktiven Betrieb bleiben und die Schleife mit den Schritten S1 bis S3 wird zumindest einmal, insbesondere mehrmals wiederholt durchlaufen. insbesondere erfolgt dies so lange, bis entweder eine dann störende Abgaswolke erkannt wird oder der aktive Betrieb der Ultraschallsensorvorrichtung 2 beendet wird.

Alternativ kann auch vorgesehen sein, dass Kraftfahrzeug 1 unabhängig von einer Detektion einer Abgaswolke 22 immer dann mit der elektrischen Antriebsmaschine 17 betrieben wird, wenn die Ultraschallsensorvorrichtung 2 aktiviert wird, beispielsweise dann, das die Ultraschallsensorvorrichtung 2 umfassende Fahrerassistenzsystem, insbesondere das Parkassistenzsystem, aktiviert wird. Dies kann beispielsweise durch ein Bedienelement und/oder durch Einlegen eines Rückwärtsgangs bzw. einer Rückfahrstufe der Fall sein. insbesondere, wenn die Brennkraftmaschine 10 aktiv ist, wird der aktive Betrieb der elektrischen Antriebsmaschine 17 dann mit dem Starten des Fahrerassistenzsystems gestartet und die Brennkraftmaschine 10 abgestellt.

Ganz allgemein kann somit auch vorgesehen sein, dass die elektrische Antriebsmaschine 17 dann im aktiven Betrieb betrieben wird, wenn ein automatisches oder semi-autonomes Parken des Kraftfahrzeugs 1 aktiviert wird, etwa durch Einlegen des Rückwärtsgangs und/oder mittels eines entsprechenden Bedienelements. Ob dann vorher die Brennkraftmaschine 10 aktiv war oder nicht, ist bei dieser Ausführung dann unerheblich.

## Patentansprüche

1. Verfahren zum Betreiben eines Kraftfahrzeugs (1), bei welchem durch zumindest einen im aktiven Betrieb betriebenen Ultraschallsensor (3) einer Ultraschallsensorvorrichtung (2) des Kraftfahrzeugs (1) Ultraschallwellen in einen Umgebungsbereich (9) des Kraftfahrzeugs (1) ausgesendet werden, wobei
das Kraftfahrzeug (1) als Hybridfahrzeug mit einer Brennkraftmaschine (10) und einer elektrischen Antriebsmaschine (17) ausgestattet wird und zumindest zeitweise in dem aktiven Betrieb des an einem Heck (4) des Kraftfahrzeugs (1) angeordneten Ultraschallsensors (3) das Kraftfahrzeug (1) mit der elektrischen Antriebsmaschine (17) betrieben wird,
**dadurch gekennzeichnet, dass**
im Falle, dass bei einem Aktivieren des Ultraschallsensors (3) das Kraftfahrzeug (1) mit der Brennkraftmaschine (10) betrieben wird, die Brennkraftmaschine (10) abgeschaltet wird und die elektrische Antriebsmaschine (17) aktiviert wird, oder
anhand von Sensordaten zumindest eines von dem Ultraschallsensor (3) verschiedenen Sensors (18, 19, 20, 21) des Kraftfahrzeugs (1) eine von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird.

2. Verfahren nach Anspruch 1,
**dadurch gekennzeichnet, dass**
anhand der Sensordaten des zumindest einen von dem Ultraschallsensor (3) verschiedenen Sensors (18, 19, 20, 21) des Kraftfahrzeugs (1) die von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird und die Abgaswolke (22) anhand einer charakterisierenden Abgas-Grenzschicht detektiert wird.

3. Verfahren nach Anspruch 1 oder 2,
**dadurch gekennzeichnet, dass**
anhand der Sensordaten des zumindest einen von dem Ultraschallsensor (3) verschiedenen Sensors (18, 19, 20, 21) des Kraftfahrzeugs (1) die von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird und die Abgaswolke (22), insbesondere die Abgas-Grenzschicht, abhängig von zumindest einer Messgröße als Sensordaten erfolgt, welche mittels eines in der Auspuffanlage (11) angeordneten Sensors (18) gemessen wird, insbesondere abhängig von zumindest einer der folgenden Messgrößen:
- einer Temperatur des Abgases und/oder
- einer Feuchtigkeit des Abgases und/oder
- einer Strömungsgeschwindigkeit des Abgases und/oder
- einem Abgasdruck und/oder
- einem Massenstrom des Abgases und/oder
- einer das Verhältnis einer Verbrennungsluft zu einem Kraftstoff in zumindest einem Brennraum einer Brennkraftmaschine (10) des Kraftfahrzeugs (1) charakterisierenden Messgröße, welche insbesondere mittels einer Lambda-Sonde gemessen wird.

4. Verfahren nach einem der vorhergehenden Ansprüche,
**dadurch gekennzeichnet, dass**
anhand der Sensordaten des zumindest einen von dem Ultraschallsensor (3) verschiedenen Sensors (18, 19, 20, 21) des Kraftfahrzeugs (1) die von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird und das Detektieren der Abgaswolke (22), insbesondere die Abgas-Grenzschicht, abhängig von einer aktuellen Motortemperatur als Sensordaten erfolgt und/oder das Detektieren der Abgaswolke (22) abhängig von atmosphärischen Umgebungsbedingungen des Kraftfahrzeugs (1), insbesondere abhängig von einer Windgeschwindigkeit und/oder einer Luftfeuchtigkeit und/oder Lufttemperatur, erfolgt.

5. Verfahren nach einem der vorhergehenden Ansprüche,
**dadurch gekennzeichnet, dass**
anhand der Sensordaten des zumindest einen von dem Ultraschallsensor (3) verschiedenen Sensors (18, 19, 20, 21) des Kraftfahrzeugs (1) die von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird und das Detektieren der Abgaswolke (22) abhängig von zumindest einem Konstruktionsparameter des Kraftfahrzeugs (1) erfolgt, insbesondere abhängig von zumindest einem der folgenden Parameter:
- einem Abstand zwischen dem Ultraschallsensor (3) einerseits und einem Auslass (14, 15) eines Endrohrs (12, 13) der Auspuffanlage (11) andererseits und/oder
- einer Querschnittsgröße des Endrohrs (12, 13) und/oder
- der Anzahl von Endrohren (12, 13) der Auspuffanlage (11) und/oder
- der Anzahl von Abgasturboladern des Kraftfahrzeugs (1) und/oder
- einem Hubvolumen einer Brennkraftmaschine (10) des Kraftfahrzeugs (1) und/oder
- einem Typ der Brennkraftmaschine (10).

6. Verfahren nach einem der vorhergehenden Ansprüche,
**dadurch gekennzeichnet, dass**
der aktive Betrieb des Ultraschallsensors (3) mit dem Starten eines Fahrerassistenzsystems, dem der Ultraschallsensor (3) funktionell zugeordnet ist, gestartet wird.

7. Verfahren nach einem der vorhergehenden Ansprüche,
**dadurch gekennzeichnet, dass**
\der aktive Betrieb des Ultraschallsensors (3) mit dem Einlegen einer Rückwärtsfahrstufe des Kraftfahrzeugs (1) gestartet wird.

8. Kraftfahrzeug (1) mit einer Ultraschallsensorvorrichtung (2), welche zumindest einen Ultraschallsensor (3) aufweist, durch welchen im aktiven Betrieb Ultraschallwellen in einen Umgebungsbereich (9) des Kraftfahrzeugs (1) aussendbar sind, wobei das Kraftfahrzeug (1) als Hybrid-Fahrzeug eine Brennkraftmaschine (10) und eine elektrische Antriebsmaschine (17) aufweist, und das Kraftfahrzeug (1) zumindest zeitweise in dem aktiven Betrieb des an einem Heck (4) des Kraftfahrzeugs (1) angeordneten Ultraschallsensors (3) mit der elektrischen Antriebsmaschine (17) betrieben ist,
**dadurch gekennzeichnet, dass**
im Falle, dass bei einem Aktivieren des Ultraschallsensors (3) das Kraftfahrzeug (1) mit der Brennkraftmaschine (10) betrieben ist, die Brennkraftmaschine (10) abgeschaltet wird und die elektrische Antriebsmaschine (17) aktiviert wird oder anhand von Sensordaten zumindest eines von dem Ultraschallsensor (3) verschiedenen Sensors (18, 19, 20, 21) des Kraftfahrzeugs (1) eine von einer Auspuffanlage (11) des Kraftfahrzeugs (1) in den Umgebungsbereich (9) ausgegebene und von der Brennkraftmaschine (10) im aktiven Betrieb erzeugte Abgaswolke (22), an welcher die Ultraschallwellen reflektiert werden, detektiert wird und abhängig von der Detektion der Abgaswolke (22) die Brennkraftmaschine (10) abgeschaltet und die elektrische Antriebsmaschine (17) aktiviert wird.

## Claims

1. A method for operating a motor vehicle (1), in which ultrasonic waves are emitted into an environmental area (9) of the motor vehicle (1) by at least one ultrasonic sensor (3), operated in the active operation, of an ultrasonic sensor device (2) of the motor vehicle (1), wherein
the motor vehicle (1) is equipped with an internal combustion engine (10) and an electrical drive machine (17) as a hybrid vehicle and is at least temporarily operated with the electrical drive machine (17) in the active operation of the ultrasonic sensor (3) of the motor vehicle (1) arranged at a rear (4) of the motor vehicle (1),
**characterized in that**
in case that the motor vehicle (1) is operated with the internal combustion engine (10) upon activation of the ultrasonic sensor (3), the internal combustion engine (10) is turned off and the electrical drive machine (17) is activated, or
based on sensor data of at least one sensor (18, 19, 20, 21) of the motor vehicle (1) different from the ultrasonic sensor (3), an exhaust cloud (22), from which the ultrasonic waves are reflected, output from an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22).

2. The method according to claim 1,
**characterized in that**
based on the sensor data of the at least one sensor (18, 19, 20, 21) of the motor vehicle (1) different from the ultrasonic sensor (3), the exhaust cloud (22), from which the ultrasonic waves are reflected, output by an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22) and the exhaust cloud (22) is detected based on a characterizing exhaust gas interface.

3. The method according to claim 1 or 2,
**characterized in that**
based on the sensor data of the at least one sensor (18, 19, 20, 21) of the motor vehicle (1) different from the ultrasonic sensor (3), the exhaust cloud (22), from which the ultrasonic waves are reflected, output by an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22), and the exhaust cloud (22), in particular the exhaust gas interface, is effected depending on at least one measurement quantity as sensor data, which is measured by means of a sensor (18) arranged in the exhaust system (11), in particular depending on at least one of the following measurement quantities:
- a temperature of the exhaust gas, and/or
- a humidity of the exhaust gas, and/or
- a flow velocity of the exhaust gas, and/or
- an exhaust gas pressure, and/or
- a mass flow of the exhaust gas, and/or
- a measurement quantity characterizing the ratio of a combustion air to a fuel in at least one combustion chamber of an internal combustion engine (10) of the motor vehicle (1), which is in particular measured by means of a lambda probe.

4. The method according to any one of the preceding claims,
**characterized in that**
based on the sensor data of the at least one sensor (18, 19, 20, 21) of the motor vehicle (1) different from the ultrasonic sensor (3), the exhaust cloud (22), from which the ultrasonic waves are reflected, output by an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22), and the detection of the exhaust cloud (22), in particular the exhaust gas interface, is effected depending on a current engine temperature as sensor data and/or the detection of the exhaust cloud (22) is effected depending on atmospheric environmental conditions of the motor vehicle (1), in particular depending on a wind velocity and/or an air humidity and/or air temperature.

5. The method according to any one of the preceding claims,
**characterized in that**
based on the sensor data of the at least one sensor (18, 19, 20, 21) of the motor vehicle (1) different from the ultrasonic sensor (3), the exhaust cloud (22), from which the ultrasonic waves are reflected, output by an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22), and the detection of the exhaust cloud (22) is effected depending on at least one construction parameter of the motor vehicle (1), in particular depending on at least one of the following parameters:
- a distance between the ultrasonic sensor (3) on the one hand and an outlet (14, 15) of a tailpipe (12, 13) of the exhaust system (11) on the other hand, and/or
- a cross-sectional size of the tailpipe (12, 13), and/or
- the number of tailpipes (12, 13) of the exhaust system (11), and/or
- the number of exhaust gas turbochargers of the motor vehicle (1), and/or
- a displacement of an internal combustion engine (10) of the motor vehicle (1), and/or
- a type of the internal combustion engine (10).

6. The method according to any one of the preceding claims,
**characterized in that**
the active operation of the ultrasonic sensor (3) is started with the start of a driver assistance system, with which the ultrasonic sensor (3) is functionally associated.

7. The method according to any one of the preceding claims,
**characterized in that**
the active operation of the ultrasonic sensor (3) is started with engaging a reversing stage of the motor vehicle (1).

8. A motor vehicle (1) with an ultrasonic sensor device (2), which comprises at least one ultrasonic sensor (3), by which ultrasonic waves can be emitted into an environmental area (9) of the motor vehicle (1) in the active operation, wherein the motor vehicle (1) comprises an internal combustion engine (10) and an electrical drive machine (17) as a hybrid vehicle, and the motor vehicle (1) is at least temporarily operated with the electrical drive machine (17) in the active operation of the ultrasonic sensor (3) arranged at a rear (4) of the motor vehicle (1),
**characterized in that**
in case that the motor vehicle (1) is operated with the internal combustion engine (10) upon activation of the ultrasonic sensor (3), the internal combustion engine (10) is turned off and the electrical drive machine (17) is activated, or based on sensor data of at least one sensor (18, 19, 20, 21) of the motor vehicle (1) different from the ultrasonic sensor (3), an exhaust cloud (22), from which the ultrasonic waves are reflected, output by an exhaust system (11) of the motor vehicle (1) into the environmental area (9) and generated by the internal combustion engine (10) in the active operation, is detected and the internal combustion engine (10) is turned off and the electrical drive machine (17) is activated depending on the detection of the exhaust cloud (22).

## Revendications

1. Procédé de fonctionnement d'un véhicule à moteur (1), dans lequel des ondes ultrasonores sont émises dans une zone environnante (3) du véhicule à moteur (1) par au moins un capteur ultrasonore (9) fonctionnant dans le mode actif d'un dispositif à capteur ultrasonore (2) du véhicule à moteur (1),
le véhicule à moteur (1) étant équipé comme un véhicule hybride avec un moteur à combustion interne (10) et une machine d'entraînement électrique (17), et le véhicule à moteur (1) fonctionnant au moins temporairement avec la machine d'entraînement électrique (17) dans le mode actif du capteur ultrasonore (3) agencé sur un arrière (4) du véhicule à moteur (1),
**caractérisé en ce que**
dans le cas où, lors d'une activation du capteur ultrasonore (3), le véhicule à moteur (1) fonctionne avec le moteur à combustion interne (10), le moteur à combustion interne (10) est arrêté et la machine d'entraînement électrique (17) est activée, ou
sur la base de données de capteur d'au moins un capteur (18, 19, 20, 21) du véhicule à moteur (1) différent du capteur ultrasonore (3), un nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée.

2. Procédé selon la revendication 1,
**caractérisé en ce que**
sur la base des données de capteur du au moins un capteur (18, 19, 20, 21) du véhicule à moteur (1) différent du capteur ultrasonore (3), le nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée, et le nuage de gaz d'échappement (22) est détecté au moyen d'une couche limite de gaz d'échappement caractéristique.

3. Procédé selon la revendication 1 ou 2,
**caractérisé en ce que**
sur la base des données de capteur du au moins un capteur (18, 19, 20, 21) du véhicule à moteur (1) différent du capteur ultrasonore (3), le nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée, et le nuage de gaz d'échappement (22), en particulier la couche limite de gaz d'échappement, est obtenu, en fonction d'au moins une grandeur de mesure sous forme de données de capteur qui sont mesurées au moyen d'un capteur (18) agencé dans le système d'échappement (11), en particulier, en fonction d'au moins une des grandeurs de mesure suivantes :
- une température des gaz d'échappement et/ou
- une humidité des gaz d'échappement et/ou
- une vitesse d'écoulement des gaz d'échappement et/ou
- une pression de gaz d'échappement et/ou
- un débit massique des gaz d'échappement et/ou
- une grandeur de mesure caractérisant le rapport d'un air de combustion sur un carburant dans au moins une chambre de combustion d'un moteur à combustion interne (10) du véhicule à moteur (1), qui est en particulier mesurée au moyen d'une sonde lambda.

4. Procédé selon l'une des revendications précédentes,
**caractérisé en ce que**
sur la base des données de capteur du au moins un capteur (18, 19, 20, 21) du véhicule à moteur (1) différent du capteur ultrasonore (3), le nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée, et la détection du nuage de gaz d'échappement (22), en particulier de la couche limite de gaz d'échappement, est réalisée en fonction d'une température de moteur actuelle sous forme de données de capteur et/ou la détection du nuage de gaz d'échappement (22) a lieu en fonction de conditions atmosphériques ambiantes du véhicule à moteur (1), en particulier en fonction d'une vitesse du vent et/ou d'une humidité de l'air et/ou d'une température de l'air.

5. Procédé selon l'une des revendications précédentes,
**caractérisé en ce que**
sur la base des données de capteur du au moins un capteur (18, 19, 20, 21) du véhicule à moteur (1) différent du capteur ultrasonore (3), le nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée, et la détection du nuage de gaz d'échappement (22) a lieu en fonction d'au moins un paramètre de construction du véhicule à moteur (1), en particulier en fonction d'au moins un des paramètres suivants :
- une distance entre le capteur ultrasonore (3) d'une part et une sortie (14, 15) d'un tuyau d'échappement arrière (12, 13) du système d'échappement (11) d'autre part et/ou
- une taille de section du tuyau d'échappement arrière (12, 13) et/ou
- le nombre de tuyaux d'échappement (12, 13) du système d'échappement (11) et/ou
- le nombre de turbocompresseurs du véhicule à moteur (1) et/ou
- une cylindrée d'un moteur à combustion interne (10) du véhicule à moteur (1) et/ou
- un type du moteur à combustion interne (10).

6. Procédé selon l'une des revendications précédentes,
**caractérisé en ce que**
le mode actif du capteur ultrasonore (3) est lancé au démarrage d'un système d'aide à la conduite auquel le capteur ultrasonore (3) est fonctionnellement associé.

7. Procédé selon l'une des revendications précédentes,
**caractérisé en ce que**
le mode actif du capteur ultrasonore (3) est lancé lorsqu'une marche arrière du véhicule à moteur (1) est engagée.

8. Véhicule à moteur (1) ayant un dispositif à capteur ultrasonore (2) comportant au moins un capteur ultrasonore (3) au moyen duquel, dans le mode actif, des ondes ultrasonores peuvent être émises dans une zone environnante (9) du véhicule à moteur (1),
le véhicule à moteur (1) comportant, en tant que véhicule hybride, un moteur à combustion interne (10) et une machine d'entraînement électrique (17), et le véhicule à moteur (1) fonctionnant au moins temporairement avec la machine d'entraînement électrique (17) dans le mode actif du capteur ultrasonore (3) agencé sur un arrière (4) du véhicule à moteur (1),
**caractérisé en ce que**
dans le cas où, lors d'une activation du capteur ultrasonore (3), le véhicule à moteur (1) fonctionne avec le moteur à combustion interne (10), le moteur à combustion interne (10) est arrêté et la machine d'entraînement électrique (17) est activée, ou sur la base de données de capteur d'au moins un capteur (18, 19, 20, 21) du véhicule à moteur (1) différent du capteur ultrasonore (3), un nuage de gaz d'échappement (22) généré dans le mode actif par le moteur à combustion interne (10) et rejeté dans la zone environnante (9) par un système d'échappement (11) du véhicule à moteur (1), sur lequel les ondes ultrasonores sont réfléchies, est détecté et selon la détection du nuage de gaz d'échappement (22), le moteur à combustion interne (10) est arrêté et la machine d'entraînement électrique (17) est activée.
